# EUROPÄISCHE PATENTSCHRIFT

(11) **EP 2 786 900 B1**
(45) Veröffentlichungstag und Bekanntmachung des Hinweises auf die Patenterteilung: **12.11.2014**
(21) Anmeldenummer: 13162004.9
(22) Anmeldetag: 02.04.2013
(51) Int. Cl.: B60R 1/08

(54) **Innenspiegel für ein Kraftfahrzeug**
Internal mirror for a motor vehicle
Rétroviseur intérieur pour un véhicule automobile

(43) Veröffentlichungstag der Anmeldung: 08.10.2014
(73) Patentinhaber: SMR Patents S.à.r.l., 1653 Luxembourg (LU)
(72) Erfinder: Liesener, Alf, 73630 Remshalden (DE); Moritz, Michael, 22087 Hamburg (DE)
(74) Vertreter: Werth, Jochen Heinrich

(56) Entgegenhaltungen:
- EP-A1- 1 275 559
- EP-A1- 1 325 839
- FR-A5- 2 063 750
- US-A- 3 427 094
- US-A- 3 472 580
- US-A- 3 586 422
- US-A- 5 327 288

## Beschreibung

Die Erfindung betriff einen Innenspiegel für ein Kraftfahrzeug mit den Merkmalen gemäß des Oberbegriffs des Anspruchs 1.

Aus der Praxis sind Innenspiegel für Kraftfahrzeuge bekannt, die, wenn sie für den erfmdungsgemäßen Gebrauch in einem Kraftfahrzeug montiert sind, eine entgegen der Fahrtrichtung weisende Spiegelfläche umfassen. Um eine einfache Anpassung des Innenspiegels an unterschiedliche Sitzpositionen oder Körpergrößen des Fahrers des Kraftfahrzeugs zu ermöglichen, ist häufig vorgesehen, dass ein Gehäuse des Innenspiegels schwenkbar an einem beispielsweise an der Windschutzscheibe befestigten Spiegelfuß aufgenommen ist. Dabei ist häufig vorgesehen, dass die Spiegelfläche ortsfest zu dem Spiegelgehäuse angebracht ist. Um zu verhindern, dass der Fahrer des Kraftfahrzeugs in einer dunklen Umgebung von Lichtem hinter ihm fahrender Kraftfahrzeuge geblendet wird, ist es bekannt, an Innenspiegeln eine Kippvorrichtung vorzusehen, mittels der zumindest die Spiegelfläche zwischen einer ersten Kippstellung und einer zweiten Kippstellung verkippbar ist, wobei in einer der beiden Kippstellungen ein Reflektionsgrad der Spiegelfläche vermindert ist, um so ein Blenden des Fahrers zu vermeiden. Hierzu ist es bekannt, die Kippvorrichtung mit einem als Kipphebel ausgebildeten Betätigungselement zu versehen, dass durch eine Öffnung des Gehäuses des Innenspiegels hinaus geführt ist. Der Bereich außerhalb des Gehäuses des Innenspiegels bildet dann einen Eingriffsbereich für den Fahrer, der dort das Betätigungselement greifen und betätigen kann. Insbesondere ist es bekannt, einen Kipphebel bezüglich der betriebsbereit montierten Position des Innenspiegels unterhalb des Innenspiegels anzuordnen. Dies weist den Nachteil auf, dass der Kipphebel in dem Sichtbereich des Fahrers angeordnet ist und somit einerseits die Sicht stört, andererseits als ästhetisch nachteilig empfunden wird.

DE 10 2004 042 349 A1 beschreibt einen gattungsgemäßen Innenspiegel für ein Kraftfahrzeug, umfassend ein mehrteilig aufgebautes Gehäuse, dass schwenkbar an einem Spiegelfuß anordenbar ist. Das Gehäuse weist eine Spiegelfläche auf, die bei bestimmungsgemäßer Montage in einem Kraftfahrzeug den Fahrer des Kraftfahrzeugs zugewandt ist. In einer unteren Fläche des Gehäuses ist eine Öffnung vorgesehen, in der ein in vertikaler Richtung nach unten weisender Kipphebel aufgenommen ist, der außerhalb des Gehäuses in einen Eingriffsbereich für den Fahrer des Kraftfahrzeugs ragt. Durch verschwenken des Kipphebels ist das Gehäuse des Innenspiegels relativ zu dem Spiegelfuß verkippbar wobei die Spiegelfläche in einer der beiden Kipppositionen eine verminderte Lichtmenge reflektiert

Weiter offenbaren die Dokumente US 3 427 094 A, US 3 586 422 A sowie EP 1 325 839 A1 Innenspiegel für Kraftfahrzeuge mit einem Kipphebel.

DE 83 10 235 U1 beschreibt einen Innenspiegel für ein Kraftfahrzeug mit einem in vertikaler Richtung nach unten aus dem Gehäuse des Innenspiegels hinausgefiihrten Betätigungselement. Durch Drehen des Betätigungselements um eine vertikale Achse wird ein innerhalb des Spiegelgehäuses angeordnetes exzentrisches Element gegenüber einem Spiegelfuß verdreht, wobei das Spiegelgehäuse verkippt wird.

Es ist die Aufgabe der Erfindung, einen Innenspiegel für ein Kraftfahrzeug anzugeben, der ein einfaches Betätigen der Kippvorrichtung ermöglicht und der gegenüber den bekannten Innenspiegeln ästhetisch vorteilhaft ausgebildet ist.

Diese Aufgabe wird erfindungsgemäß durch einen Innenspiegel für ein Kraftfahrzeug mit den Merkmalen des Anspruchs 1 gelöst.

Der erfindungsgemäße Innenspiegel für ein Kraftfahrzeug umfasst ein Gehäuse, das vorzugsweise verschwenkbar an einem Spiegelfuß aufnehmbar ist, und eine Kippeinrichtung zum Verkippen zumindest einer Spiegelfläche des Innenspiegels zwischen wenigstens einer ersten Kippstellung und einer zweiten Kippstellung, wobei die Kippeinrichtung wenigstens ein Betätigungselement zum Verkippen der zumindest einen Spiegelfläche aufweist, wobei das Gehäuse wenigstens abschnittsweise einen Eingriffsbereich für einen Benutzer zum Betätigen des Betätigungselements begrenzt wobei der Eingriffsbereich bei zum bestimmungsgemäßen Gebrauch montiertem Innenspiegel in einem vom Fahrer des Kraftfahrzeugs abgewandten Bereich des Gehäuses und wenigstens teilweise in einer Vertiefung des Gehäuses angeordnet ist.

Zweckmäßig ist vorgesehen, dass das Gehäuse eine Öffnung zur Aufnahme des Betätigungselements aufweist.

Vorzugsweise ist das Betätigungselement als ein um eine Drehachse drehbarer Kipphebel ausgebildet.

Besonders bevorzugt ist dabei vorgesehen, dass das Gehäuse bei zum bestimmungsgemäßen Gebrauch montiertem Innenspiegel einen bezüglich der vertikalen Richtung oberen Rand des Eingriffsbereichs zumindest teilweise begrenzt, und dass die Drehachse bezüglich der vertikalen Richtung unterhalb des oberen Rands des Eingriffsbereichs angeordnet ist.

Weiterhin erweist es sich als vorteilhaft, dass das Betätigungselement in wenigstens einer von erster Kippstellung und zweiter Kippstellung wenigstens abschnittsweise eine Außenkontur des Innenspiegels begrenzt, insbesondere das Gehäuse flächenbündig begrenzt und/oder in Richtung Gehäusemitte zurückspringt.

Als besonders zweckmäßig erweist es sich, dass das Betätigungselement einen Griffbereich aufweist, und dass der Griffbereich in wenigstens einer von erster Kippstellung und zweiter Kippstellung wenigstens überwiegend einem von dem Gehäuse umschlossenen Innenbereich zugewandt ist.

Darüber hinaus erweist es sich als vorteilhaft, dass das Betätigungselement in wenigstens einer von erster Kippstellung und zweiter Kippstellung vollständig in einem von einer konvexen Umhüllenden des Innenspiegels umschlossenen Bereich angeordnet ist.

Vorzugsweise ist vorgesehen, dass das Betätigungselement drehbar an dem Gehäuse aufgenommen ist.

Schließlich wird die Aufgabe in vorteilhafter Weiterbildung der Erfindung gelöst dadurch, dass das Gehäuse mittels der Kippeinrichtung relativ zu dem Spiegelfuß verkippbar ist.

Die Erfindung beruht somit auf der überraschenden Erkenntnis, dass ein einfach zu bedienender Innenspiegel dadurch geschaffen werden kann, dass der Eingriffsbereich für einen Benutzer zum Betätigen des Betätigungselements einer Kippeinrichtung in einem vom Fahrer des Kraftfahrzeugs abgewandten Bereich des Gehäuses angeordnet ist. Hierdurch kann ein ästhetisch ansprechendes, nicht durch herausragende Hebel oder Ähnliches gestörtes Erscheinungsbild des Innenspiegel erreicht werden. Vorteilhaft kann der Innenspiegel dabei insgesamt eine Außenkontur aufweisen, die im Bereich des Blickfelds des Fahrers des Kraftfahrzeugs kontinuierlich ausgebildet ist, ohne dass in den Blickbereich ragende Hebel oder ähnliche Betätigungselemente sichtbar sind. Um zugleich eine einfache und sichere Betätigung der Kippvorrichtung durch den Fahrer des Kraftfahrzeugs zu ermöglichen, ist vorzugsweise eine Anordnung des Betätigungselements derart vorgesehen, dass der Eingriffsbereich in einer Vertiefung des Gehäuses angeordnet ist, so dass ein Fahrer insbesondere einen Greifbereich des Betätigungselements ohne Hinsehen sicher ertasten kann. Vorzugsweise ist dabei vorgesehen, dass insbesondere eine erste Kippstellung, in der das Betätigungselement für den Fahrer des Kraftfahrzeugs nicht sichtbar oder zumindest nicht als aus der Kontur des Innenspiegels herausragender Hebel sichtbar ist eine Kippstellung ist, in der der Spiegel eine hohe Reflektion aufweist. Hierbei handelt es sich somit um die übliche Gebrauchsstellung, beispielsweise für ein Fahren des Kraftfahrzeugs bei Tageslicht. Vorzugsweise ist in dieser Stellung vorgesehen, dass das Betätigungselement als ein Teil der Außenkontur des Innenspiegels ausbildet ist, insbesondere bündig mit dieser abschließt.

Vorteilhaft ist das Betätigungselement drehbar an dem Gehäuse aufgenommen, wobei zweckmäßig innerhalb des Gehäuses Elemente der Kippeinrichtung vorgesehen sind, die ein Abstützen des Betätigungselements an einem dem Spiegelfuß zugeordneten Teil ermöglichen, um so ein Verkippen des gesamten Gehäuses gegenüber dem Spiegelfuß zu ermöglichen. Besonders bevorzugt ist vorgesehen, dass der Eingriffsbereich des Innenspiegels so ausgestaltet ist, dass bei für den bestimmungsgemäßen Gebrauch montiertem Innenspiegel ein oberer Bereich des Eingriffsbereichs von dem Gehäuse begrenzt wird. Eine zwischen Betätigungselement und Gehäuse ausgebildete Drehachse ist dabei unterhalb dieses oberen Randes angeordnet.

Weitere Vorteile und Merkmale der Erfindung ergeben sich aus der nachstehenden Beschreibung bevorzugter Ausführungsbeispiele der Erfindung.
- Figur 1: zeigt eine Querschnittansicht eines ersten Ausführungsbeispiels eines erfindungsgemäßen Innenspiegels.
- Figur 2: zeigt vergrößert ein Detail aus Figur 1.
- Figur 3a: zeigt schematisch ein erstes Ausführungsbeispiel einer Kippeinrichtung für den Innenspiegel gemäß Figur 1.
- Figur 3b: zeigt ein zweites Ausführungsbeispiels einer Kippeinrichtung für den Innenspiegel gemäß Figur 1.
- Figur 3c: zeigt ein drittes Ausführungsbeispiel einer Kippeinrichtung für den Innenspiegel gemäß Figur 1.
- Figur 3d: zeigt ein viertes Ausführungsbeispiel einer Kippeinrichtung für den Innenspiegel gemäß Figur 1.

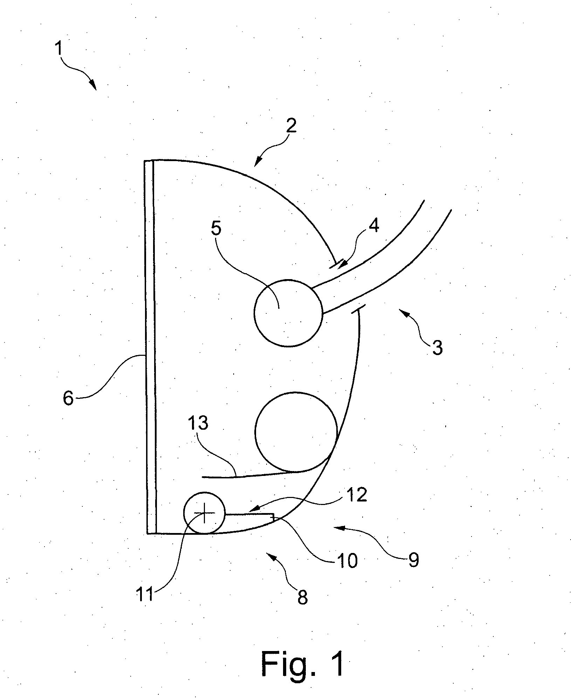

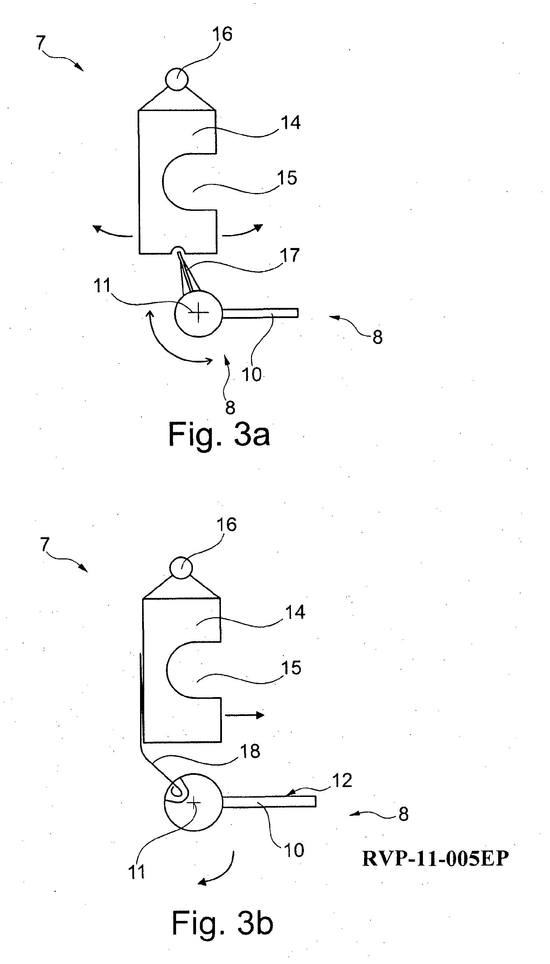

Der in Figur 1 dargestellte Innenspiegel 1 umfasst ein Gehäuse 2 und einen Spiegelfuß 3, der bei bestimmungsgemäßer Montage im Innenraum eines Kraftfahrzeugs beispielsweise an einer Windschutzscheibe des Kraftfahrzeugs befestigt ist. Das Gehäuse 2 weist eine als Öffnung ausgebildete Spiegelfußaufnahme 4 auf, durch die der Spiegelfuß 3 in das Innere des Spiegelgehäuses 2 hineinragt. An einem von dem windschutzscheibenseitigen Ende des Spiegelfußes 3 entfernten Ende weist der Spiegelfuß 3 einen Kugelkopf 5 auf. Wie nachstehend noch unter Bezugnahme auf die Figuren 3a bis 3d erläutert wird, ist das Gehäuse 2 schwenkbar an dem Kugelkopf 5 des Spiegelfußes 3 gehalten.

Das Spiegelgehäuse 2 weist eine Spiegelfläche 6 auf, die bei bestimmungsgemäßer Montage in einem Kraftfahrzeug dem Fahrer zugewandt ist und mittels der der Fahrer einen hinter dem Kraftfahrzeug befindlichen rückwärtigen Verkehrsraum beobachten kann. Der Innenspiegel 1 weist ferner eine Kippeinrichtung 7 auf, von der in Figur 1 nur ein als Kipphebel ausgebildetes Betätigungselement 8 dargestellt ist. Das Betätigungselement 8 umfasst einen Kipphebelarm 10 und einen an einem ersten Ende des Kipphebelarms 10 angeordneten kugelförmigen Bereich, in dem das Betätigungselement derart an dem Gehäuse 2 aufgenommen ist, dass eine Drehachse 11 ausgebildet ist. Das Betätigungselement 8 ist dabei in einem Eingriffsbereich 9 angeordnet, der als Vertiefung des Gehäuses 2 ausgebildet ist. Die Drehachse 11 ist horizontal in Querrichtung zur Fahrtrichtung orientiert.

Ein Verrücken der Spiegelfläche 6 zwischen einer ersten, in Figur 1 dargestellten Kippposition und einer zweiten Kippposition funktioniert dabei wie folgt:

Der Fahrer des Kraftfahrzeugs greift mit zumindest einem Finger in den Eingriffsbereich 9 des Innenspiegels, wobei ein Griffbereich 12 für ein Angreifen an das Betätigungselement 8 in einem Bereich des Kipphebelarms 10 angeordnet ist, der einem Innenbereich des Gehäuses 2 zugewandt ist. Durch Ziehen im Griffbereich 12 an dem Kipphebelarm 10 wird dieser um die Drehachse 11 in Figur 1 im Uhrzeigersinn verschwenkt. Wie nachstehend noch unter Bezugnahme auf Figur 3a bis 3d beschrieben wird, führt dies zu einem Verschwenken des Spiegelgehäuses 2 gegenüber dem Spiegelfuß 3, so dass insbesondere die Spiegelfläche 6 aus der in Figur 1 dargestellten ersten Kippposition in eine dem gegenüber verschwenkte, zweite Kippposition verkippt wird.

Wie man in Figur 1 gut erkennt, ist vorteilhaft in der dargestellten ersten Kippposition die Ausrichtung des Kipphebelarms 10 derart, dass er in einem unterem Bereich des Innenspiegels ein Teil der Außenkontur ausbildet, wodurch der Innenspiegel 1 insgesamt vorteilhaft eine gleichmäßige Außengestalt aufweist. Gleichwohl ist eine Betätigung des Betätigungselements 8 durch den Fahrer einfach möglich, da der Eingriffsbereich 9 leicht zu ertasten ist.

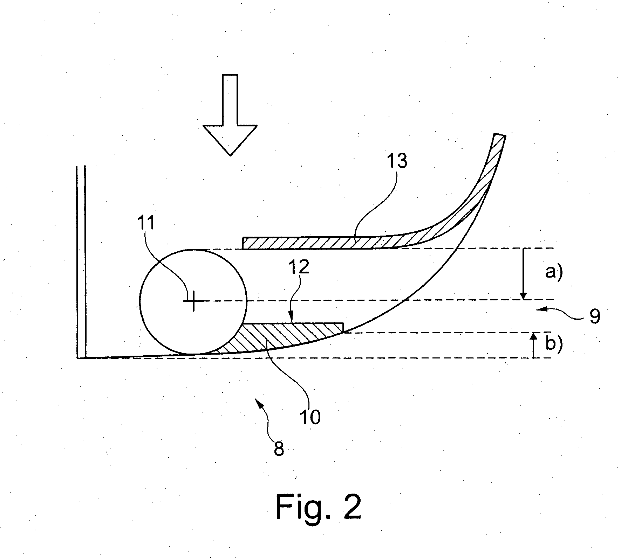

Der Eingriffsbereich 9 ist in Figur 2 nochmals vergrößert dargestellt. Wie man hier insbesondere erkennt, weist das Gehäuse 2 in dem Eingriffsbereich 9 einen in das Innere des Gehäuses 2 ragenden, bezüglich der vertikalen Richtung oberen Randbereich 13 auf. Der obere Randbereich 13 erstreckt sich in der ersten Kippposition des Betätigungselements 8 dabei parallel zu dem Kipphebelarm 10. Somit bilden der obere Randbereich 13 und der Kipphebelarm 10 gemeinsam eine sich im Wesentlichen horizontal erstreckende Eingriffsöffnung aus. Wie man ferner erkennt, weist die Drehachse 11 zum oberen Randbereich 13 einen Abstand a auf, was für eine Bedienperson ein einfaches Eingreifen ermöglicht. Ferner weist eine Unterseite des Kipphebelarms 10, dessen Außenfläche einen Teil der Außenkontur des Innenspiegels bildet, einen Abstand b zu einem unteren Randbereich des Gehäuses 2 auf. Hierdurch ist das Betätigungselement 8 für den Fahrer des Kraftfahrzeugs in der ersten Kippposition nicht sichtbar. Entsprechend ist das Betätigungselement 8 bezüglich einer gedachten konvexen umhüllenden des Gehäuses 2 vollständig innerhalb des Bereichs der Umhüllenden angeordnet.

Figur 3a zeigt schematisch den Aufbau eines ersten Ausführungsbeispiels der Kippeinrichtung 7. Diese umfasst ein Halteelement 14, dass im Inneren des Gehäuses 2 angeordnet ist und eine Kugelkopfaufnahme 15 aufweist. Das Halteelement 14 ist mittels der Kugelkopfaufnahme 15 schwenkbar auf dem Kugelkopf 5 des Spiegelfußes 3 aufgenommen. Das Gehäuse 2 ist nun einerseits in einem oberen Drehlager 16 drehbar an dem Halteelement 14 aufgenommen, andererseits ist das Gehäuse 2 in der Drehachse 11 drehbar mit dem Betätigungselement 8 verbunden. Zum Verkippen der Spiegelfläche 6 ist das Halteelement 14 ortsfest auf dem Spiegelfuß 3 gehalten. Wie man erkennt, weist das Betätigungselement 8 neben dem Kipphebelarm 10 einen Betätigungsarm 17 auf, der sich in einem Winkel von etwa 120° zu dem Betätigungsarm 10 erstreckt. Ein von der Drehachse 11 entferntes Ende des Betätigungsarms 17 ist in einer Mulde des Halteelements 14 aufgenommen, so dass sich eine drehbare Lagerung des Betätigungsarms 17 an dem Halteelement 14 ergibt. Durch Drehen des Kipphebelarms 10 durch den Fahrer des Kraftfahrzeugs im Uhrzeigersinn ergibt sich nun eine Schwenkbewegung des Betätigungsarms 17 ebenfalls im Uhrzeigersinn, wodurch im Ergebnis das Gehäuse 2 gemeinsam mit der Drehachse 11 eine Kreisbewegung um das oberer Drehlager 16, ebenfalls im Uhrzeigersinn, ausführt. Diese Bewegung endet in der zweiten Kippposition der Spiegelfläche 6. Umgekehrt kann durch Verschwenken des Kipphebelarms 10, ausgehend aus der zweiten Kippposition in eine Richtung entgegen des Uhrzeigersinns, eine Schwenkbewegung des Gehäuses 2 um das obere Drehlager 16 zurück in die erste Kippstellung bewirkt werden.

Figur 3b zeigt ein zweites Ausführungsbeispiel der Kippeinrichtung 7, wobei gegenüber dem ersten Ausführungsbeispiel gleiche Elemente mit gleichen Bezugszeichen versehen sind. Das zweite Ausführungsbeispiel unterscheidet sich im Wesentlichen von dem ersten Ausführungsbeispiel dadurch, dass statt eines Betätigungsarms 17 eine an dem Halteelement angreifende Betätigungsfeder 18 vorgesehen ist.

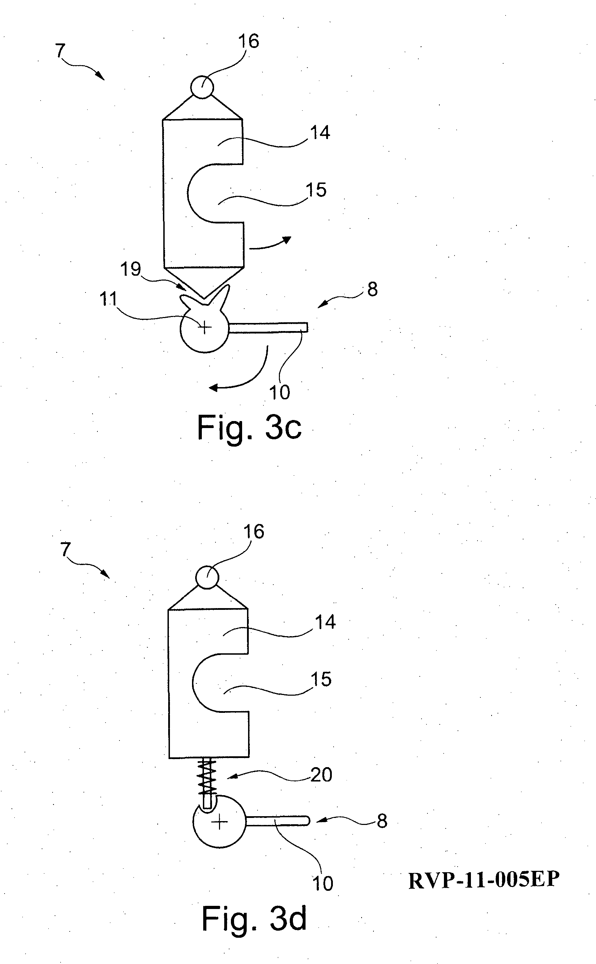

Figur 3c zeigt ein drittes Ausführungsbeispiel, bei dem der Betätigungsarm 17 des ersten Ausführungsbeispiels bzw. die Betätigungsfeder 18 des zweiten Ausführungsbeispiels durch einen Führungsbereich 19 ersetzt sind, der mit einem unteren, geführten Ende des Halteelements 14 zusammen wirkt. Das in Figur 3c dargestellte Ausführungsbeispiel der Kippeinrichtung 7 stellt somit im Wesentlichen eine kinematische Umkehr des in Figur 3a dargestellten ersten Ausführungsbeispiels der Kippeinrichtung 7 dar.

Figur 3d zeigt ein viertes Ausführungsbeispiel der Kippeinrichtung 7, bei der das Betätigungselement 8 ein Federbein 20 aufweist, das exzentrisch an dem Betätigungselement 8 einerseits und an dem Halteelement 14 andererseits angreift. Diese Ausgestaltung hat den Vorteil, dass im Gegensatz zu den Ausführungsbeispielen gemäß Figuren 3a bis 3c während des Kippvorgangs keine Druckkräfte auf das obere Drehlager 16 und die Drehachse 11 ausgeübt werden, da diese durch das Federbein 20 aufgenommen werden.

### Bezugszeichenliste

- 1: Innenspiegel
- 2: Gehäuse
- 3: Spiegelfuß
- 4: Spiegelfußaufnahme
- 5: Kugelkopf
- 6: Spiegelfläche
- 7: Kippeinrichtung
- 8: Betätigungselement
- 9: Eingriffsbereich
- 10: Kipphebelarm
- 11: Drehachse
- 12: Griffbereich
- 13: oberer Randbereich
- 14: Halteelement
- 15: Kugelkopfaufnahme
- 16: oberes Drehlager
- 17: Betätigungsarm
- 18: Betätigungsfeder
- 19: Führungsbereich
- 20: Federbein

## Patentansprüche

1. Innenspiegel (1) für ein Kraftfahrzeug, umfassend ein Gehäuse (2), das vorzugsweise verschwenkbar an einem Spiegelfuß (3) aufnehmbar ist, und eine Kippeinrichtung (7) zum Verkippen zumindest einer Spiegelfläche (6) des Innenspiegels (1) zwischen wenigstens einer ersten Kippstellung und einer zweiten Kippstellung, wobei die Kippeinrichtung (7) wenigstens ein Betätigungselement (8) zum Verkippen der zumindest einen Spiegelfläche (6) aufweist, wobei das Gehäuse (2) wenigstens abschnittsweise einen Eingriffsbereich (9) für einen Benutzer zum Betätigen des Betätigungselements (8) begrenzt, wobei der Eingriffsbereich (9) bei zum bestimmungsgemäßen Gebrauch montiertem Innenspiegel (1) in einem vom Fahrer des Kraftfahrzeugs abgewandten Bereich des Gehäuses (2) angeordnet ist,
**dadurch gekennzeichnet, dass**
der Eingriffsbereich (9) wenigstens teilweise in einer Vertiefung des Gehäuses (2) angeordnet ist.

2. Innenspiegel (1) nach Anspruch 1, **dadurch gekennzeichnet, dass** das Gehäuse (2) eine Öffnung zur Aufnahme des Betätigungselements (8) aufweist.

3. Innenspiegel (1) nach einem der vorangehenden Ansprüche, **dadurch gekennzeichnet, dass** das Betätigungselement (8) als ein um eine Drehachse (11) drehbarer Kipphebel ausgebildet ist.

4. Innenspiegel (1) nach einem der vorangehenden Ansprüche, **dadurch gekennzeichnet, dass** das Gehäuse (2) bei zum bestimmungsgemäßen Gebrauch montiertem Innenspiegel (1) einen bezüglich der vertikalen Richtung oberen Rand (13) des Eingriffsbereichs (9) zumindest teilweise begrenzt, und dass die Drehachse (11) bezüglich der vertikalen Richtung unterhalb des oberen Rands (13) des Eingriffsbereichs (9) angeordnet ist.

5. Innenspiegel (1) nach einem der vorangehenden Ansprüche, **dadurch gekennzeichnet, dass** das Betätigungselement (8) in wenigstens einer von erster Kippstellung und zweiter Kippstellung wenigstens abschnittsweise eine Außenkontur des Innenspiegels (1) begrenzt, wobei insbesondere das Betätigungselement (8) das Gehäuse flächenbündig begrenzt und/oder in Richtung Gehäusemitte zurückspringt.

6. Innenspiegel (1) nach einem der vorangehenden Ansprüche, **dadurch gekennzeichnet, dass** das Betätigungselement (8) einen Griffbereich (12) aufweist, und dass der Griffbereich (12) in wenigstens einer von erster Kippstellung und zweiter Kippstellung wenigstens überwiegend einem von dem Gehäuse (2) umschlossenen Innenbereich zugewandt ist.

7. Innenspiegel (1) nach einem der vorangehenden Ansprüche, **dadurch gekennzeichnet, dass** das Betätigungselement (8) in wenigstens einer von erster Kippstellung und zweiter Kippstellung vollständig in einem von einer konvexen Umhüllenden des Innenspiegels (1) umschlossenen Bereich angeordnet ist.

8. Innenspiegel (1) nach einem der vorangehenden Ansprüche, **dadurch gekennzeichnet, dass** das Betätigungselement (8) drehbar an dem Gehäuse (2) aufgenommen ist.

9. Innenspiegel (1) nach einem der vorangehenden Ansprüche, **dadurch gekennzeichnet, dass** das Gehäuse (2) mittels der Kippeinrichtung (7) relativ zu dem Spiegelfuß (3) verkippbar ist.

## Claims

1. An internal mirror (1) for a motor vehicle, comprising a housing (2) that can be accommodated on a mirror foot (3), preferably such that the housing (2) can swivel, and a tilting device (7) for tilting at least one mirror face (6) of the internal mirror (1) between at least one first tilting position and one second tilting position, wherein the tilting device (7) has at least one actuating member (8) for tilting the at least one mirror face (6), wherein the housing (2) delimits, at least in sections, a gripping region (9) for a user for actuating the actuating member (8), wherein the gripping region (9) is arranged, when the internal mirror (1) is mounted for intended use, in a region of the housing (2) facing away from the driver of the motor vehicle,
**characterized in that**
the gripping region (9) is at least partially arranged in a recess of the housing (2).

2. The internal mirror (1) according to claim 1, **characterized in that** the housing (2) has an opening for accommodating the actuating member (8).

3. The internal mirror (1) according to any one of the preceding claims, **characterized in that** the actuating member (8) is designed as a tilting lever that can be rotated about an axis of rotation (11).

4. The internal mirror (1) according to any one of the preceding claims, **characterized in that** when the internal mirror (1) is mounted for intended use, the housing (2) at least partially delimits an upper edge (13) of the gripping region (9), said edge being an upper edge with respect to the vertical direction, and that the axis of rotation (11) is arranged, with respect to the vertical direction, below the upper edge (13) of the gripping region (9).

5. The internal mirror (1) according to any one of the preceding claims, **characterized in that** the actuating member (8) delimits, at least in sections, an outer contour of the internal mirror (1) in the first tilting position or/and in the second tilting position, wherein, in particular, the actuating member (8) delimits the housing such that it is flush-mount and/or springs back toward the center of the housing.

6. The internal mirror (1) according to any one of the preceding claims, **characterized in that** the actuating member (8) has a handle region (12) and that in the first tilting position or/and in the second tilting position, the handle region (12) at least mainly faces an inner region that is enclosed by the housing (2).

7. The internal mirror (1) according to any one of the preceding claims, **characterized in that** in the first tilting position or/and in the second tilting position, the actuating member (8) is completely arranged in a region that is enclosed by a convex envelope of the internal mirror (1).

8. The internal mirror (1) according to any one of the preceding claims, **characterized in that** the actuating member (8) is rotatably accommodated on the housing (2).

9. The internal mirror (1) according to any one of the preceding claims, **characterized in that** the housing (2) can be tilted relative to the mirror foot (3) by means of the tilting device (7).

## Revendications

1. Rétroviseur intérieur (1) pour un véhicule automobile, comprenant un boîtier (2) pouvant de préférence être installé de manière pivotante sur une embase de rétroviseur (3), et un dispositif de basculement (7) destiné à basculer au moins une surface spéculaire (6) du rétroviseur intérieur (1) entre au moins une première position de basculement et une seconde position de basculement, dans lequel le dispositif de basculement (7) comprend au moins un élément d'actionnement (8) pour basculer la au moins une surface spéculaire (6), dans lequel le boîtier (2) délimite au moins partiellement une zone de prise (9) destinée à un utilisateur pour actionner l'élément d'actionnement (8), dans lequel la zone de prise (9) est agencée, en ayant le rétroviseur intérieur (1) monté pour un fonctionnement correct, dans une zone du boîtier (2) opposée au conducteur du véhicule automobile,
**caractérisé en ce que**
la zone de prise (9) est au moins partiellement disposée dans un évidement du boîtier (2).

2. Rétroviseur intérieur (1) selon la revendication 1, **caractérisé en ce que** le boîtier (2) présente une ouverture destinée à recevoir l'élément d'actionnement (8).

3. Rétroviseur intérieur (1) selon l'une quelconque des revendications précédentes, **caractérisé en ce que** l'élément d'actionnement (8) est conçu sous la forme d'un levier de basculement pouvant tourner autour d'un axe de rotation (11).

4. Rétroviseur intérieur (1) selon l'une quelconque des revendications précédentes, **caractérisé en ce que** le boîtier (2) délimite au moins partiellement, en ayant le rétroviseur intérieur (1) monté pour une utilisation correcte, un bord supérieur (13) de la zone de prise (9) par rapport à la direction verticale, et **en ce que** l'axe de rotation (11) est disposé au-dessous du bord supérieur (13) de la zone de prise (9) par rapport à la direction verticale

5. Rétroviseur intérieur (1) selon l'une quelconque des revendications précédentes, **caractérisé en ce que** l'élément d'actionnement (8), dans au moins l'une des première et seconde positions de basculement, délimite au moins en partie un contour extérieur du rétroviseur intérieur (1), de sorte qu'en particulier, l'élément d'actionnement (8) est délimité affleurant au boitier, et/ou revient par ressort vers le centre du boîtier.

6. Rétroviseur intérieur (1) selon l'une quelconque des revendications précédentes, **caractérisé en ce que** l'élément d'actionnement (8) présente une zone de prise (12), et **en ce que** la zone de prise (12), dans au moins l'une des première et seconde positions de basculement, est en vis-à-vis, au moins de manière prédominante, d'une zone intérieure fermée du boîtier (2).

7. Rétroviseur intérieur (1) selon l'une quelconque des revendications précédentes, **caractérisé en ce que** l'élément d'actionnement (8) est agencé, dans au moins l'une des première et seconde positions de basculement, entièrement dans une zone fermée d'une enveloppe convexe du rétroviseur intérieur (1).

8. Rétroviseur intérieur (1) selon l'une quelconque des revendications précédentes, **caractérisé en ce que** l'élément d'actionnement (8) est reçu de manière rotative sur le boîtier (2).

9. Rétroviseur intérieur (1) selon l'une quelconque des revendications précédentes, **caractérisé en ce que** le boîtier (2) peut être basculé par rapport à l'embase de rétroviseur (3) par l'intermédiaire du dispositif de basculement (7).
